# EUROPEAN PATENT APPLICATION

(11) **EP 1 763 273 A1**
(43) Date of publication of application: **14.03.2007**
(21) Application number: 05425628.4
(22) Date of filing: 08.09.2005
(51) Int. Cl.: H04Q 7/38, H04L 12/56

(54) **Bearer service resource management method in ambient networks**

(71) Applicant: Siemens S.p.A., 20126 Milano (IT)
(72) Inventor: Meago, Francesco, 23100 Sondrio (IT)

(57) **Abstract**

Ambient Network (AN) characterized by Ambient Control Space and Connectivity includes interfaces with other ANs to exchange information about services and available resources. Within AN, a Resource Manager (RM) functionality operates either in a centralized or distributed fashion. The RM functionality calculates the bearer service (BS) availability for each specified access route on the basis of load information, in order to exchange at those interfaces negotiation messages which contain *Bearer Service Description Information Elements* (IE) for the purpose of describing required bearer services and/or the bearer services that can be offered end-to-end over the specified access routes. The description includes in its turn: BS characteristics, BS requirements, and BS availability information elements. The RM foresees multi-access operations, Multi Radio Transmission Diversity (MRTD) between accesses in the same or different ANs, multi-hop, unicast, multicast/broadcast (M/B), UL/DL, cost and security management even in a combined fashion. The access route is specified end-to-end from one route head to one or more route ends, possibly passing through one or more networks and different access technologies. A route head corresponds to a given AN. A route end corresponds either to a network(s) or to specific "access methods" of a network. An access method may correspond to a given access technology (e.g. GSM), or to a sub-technology of a given technology (e.g. UMTS HSDPA), or to a generic method how to access a network (e.g. GLL parallel transmission between UMTS) (fig.5).

## Description

### FIELD OF THE INVENTION

The present invention relates to the field of communication networks, and more precisely to a bearer service resource management method in Ambient Networks.

### BACKGROUND ART

IST-2002-507134-AN/WP2/D02, Version 1.0, dated 2005-02-17, titled: "D2-2 MRA Architecture", published in the ambit of Sixth Framework Program on WWI Ambient Networks (AN), describes the background for the present invention. The IST Ambient Networks project aims to define a beyond-3G playground of future-proof networking mechanisms able to cope with a variety of interesting and diverse business scenarios where today's and future networks coexist and interoperate in a multi-access, multi-hop, multi-domain, multi-operator, user-centric environment that is capable to support a variety of services including unicast as well as multicast/broadcast services. Next **figures 1** to **4** are taken from this document (called Ref.D2-2 hereafter). The following definitions are taken from Ref.D2-2 paragraph 2.2 (used acronyms are reported at the end of the description):
- **Ambient Network (AN)**: An Ambient Network is a collection of nodes and/or devices, which expose their communication resources to User/other Ambient Networks in a controlled way through a well defined external interface, namely the Ambient Network Interface (ANI). Ambient Networks can compose, whereby the combination of their resources is made available through the ANI. An AN can execute AN Service agreements.
- **Ambient Network domain**: A set of nodes and/or devices related to a certain authority with particular AN functionality/roles such that it can establish AN service agreement with other AN domains, on behalf of all or certain parts of the domain. An AN domain is governed by the one authority (owner).
- **Broadcast**: Transmission towards all user in a given service area.
- **Context Transfer**: A mechanism to transport information on the current state of an object or element to another entity. For example, in a Level 2 (L2) context transfer, information about header compression states, quality of service context, buffer state, etc. is exchanged.
- **Generic Link Layer (GLL)**: Generic functions which enable and facilitate efficient link-layer interworking among multiple, possible diverse, radio accesses.
- **Multicast:** Transmission towards a specific group of users in a given service area.
- **Multi-Radio Access Architecture:** Architecture that supports the use of several radio access technologies.
- **Multi-Radio Resource Management (MRRM):** Generic functionality for the management of one or multiple radio accesses. MRRM covers network complementing RRM functions as well as AN-compliant Radio Access (RA) coordination functions.
- **Radio Access (RA)**: A typical, basic radio access is a direct wireless link between two communication entities characterized by a given radio access technology and an associated provider. In general, a radio access may consist of multiple basic radio accesses, combined in parallel and/or multi-hop fashion, and thus possibly consist of different radio access technologies and providers.
- **Radio Access Technology (RAT):** Any wireless technology. It can be an already defined (legacy radio access technology, like: GSM, UMTS, EDGE, GPRS, Bluetooth, HiperLAN, IEEE 802.16, IEEE 802.11....) or future access technology.

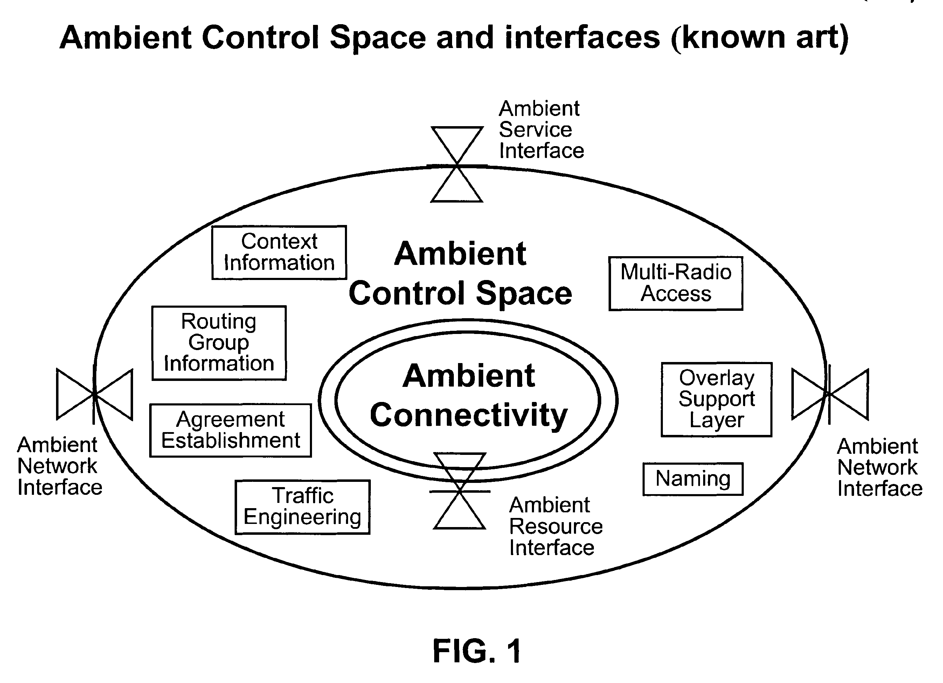

**Fig.1** schematizes a typical Ambient Network (AN) scenario characterised by a control plane, called Ambient Control Space (ACS), and an Ambient Connectivity (ACY) functionality. The ACS includes a number of functionalities capable of managing Multi-radio Access, Context information, mobility, security and even more. The ACS includes interfaces towards the higher layers of control functionality, such as user applications through the Ambient Service Interface (ASI), and also includes Ambient Resource Interfaces (ARI) towards the ACY, i.e. the lower layers of control functionality. ANs and their respective ACSs interact through the ANI. ASI, ARI and ANI are logical interfaces that may run over heterogeneous communication means and access technologies.

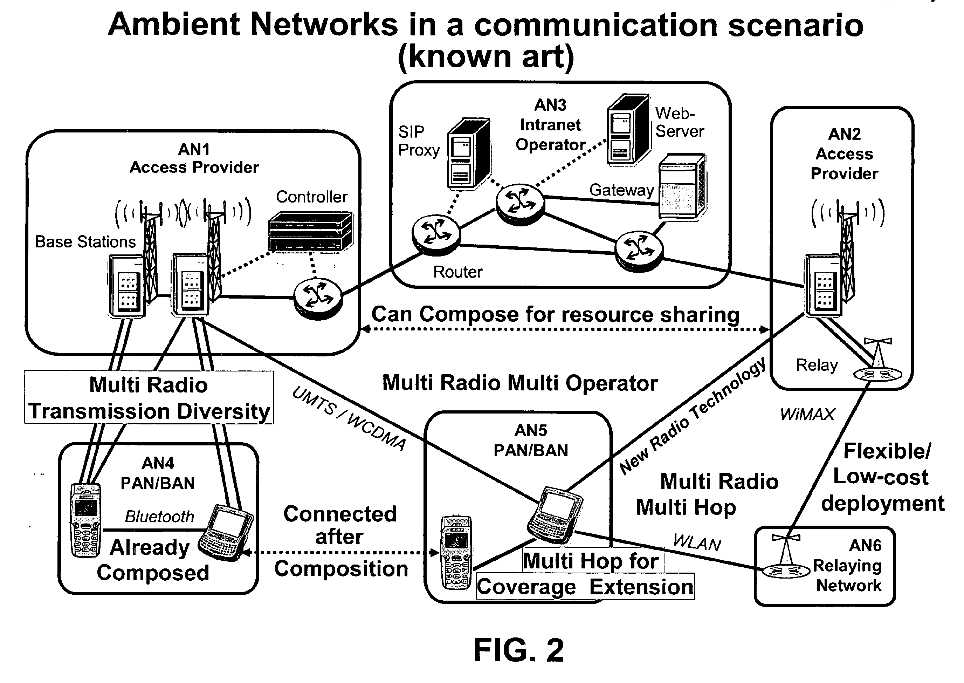

**Fig.2** illustrates different ANs (AN1 to AN6) in a communication scenario. Solid lines represent access technologies spanning from fixed lines to various radio access technologies. Dotted lines represent relationships established between ANs. With reference to **fig.2**, an Access Provider Network AN1 includes some Base Stations connected to a Controller (e.g.: BSC, RNC, etc.) and to a Router (e.g.: IP Router). A PAN/BAN AN4 includes TEs/UEs connected to each other by a Bluetooth link, and to the AN1's Base Stations through several access technologies using Multi-Radio Transmission Diversity (MRTD). PAN/BAN AN5 includes TEs/UEs connected to each other in such a way that one terminal currently out of coverage can still connect to the access providers through a multi-hop link via the other terminal, which happens to be under coverage of two access providers using different access technologies, therefore realising coverage extension through multi-hop. Not only, AN5 can exploit multi-radio multi-operator operations, thanks to the connection to different access providers. An IP Router inside AN1 is connected via terrestrial link (optical link) to an IP Router inside Intranet AN3, which is a content provider. AN3 further includes SIP Proxy, Web Server and Gateway interconnected by means of IP Routers. Network AN2 includes a Base Station respectively connected to: a Router of AN3, UE/TE inside AN5 via New Radio Technology (WINNER), and an internal Relay node. The latter is connected through a WiMAX link to a Relay Network AN6, which provides coverage extension in a flexible and low-cost manner. AN6 is further connected to the UE/TE of AN5 by a WLAN link. As a result, AN5 is connected to AN2 through multi-radio multi-hop routes.

**Fig.2** is a high-level view of the role and example capabilities of the Multi Radio Access (MRA). Basic types of composition are shown, e.g. ANs of different access providers can compose in order to enable resource sharing. Composition also allows for dynamic agreements between end-users, new type of access providers even including end-users themselves, thereby allowing for new ways of cooperation including new business roles.

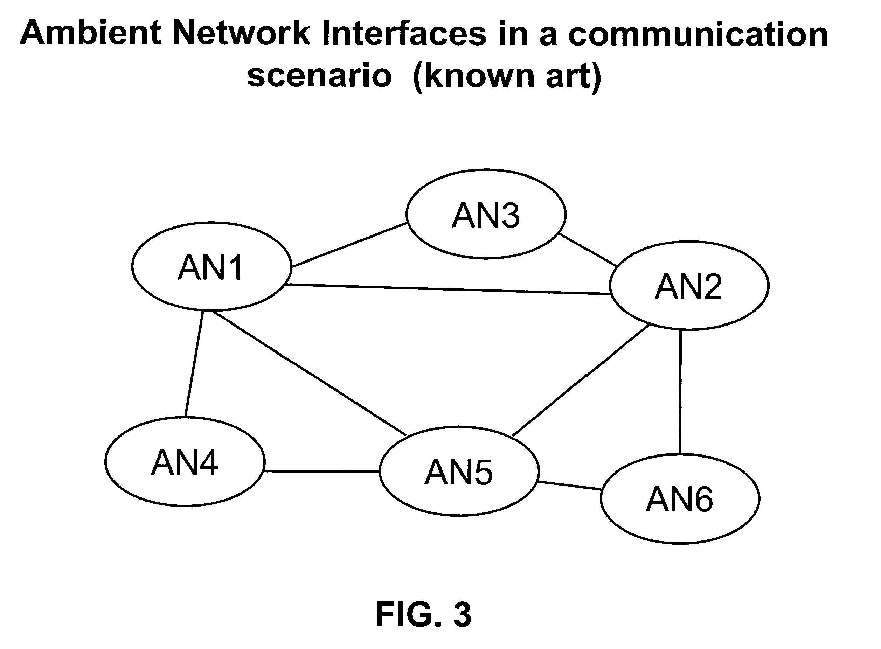

In **fig.3**, ANI interfaces of the fig.2 scenario are shown. ANI may exist between two ANs that do not have a direct connection between them (e.g. AN4 - AN5). Also, one single ANI may exist between different ANs that have more than one connection between them (AN1 - AN4). With reference to **fig.3**, every network or communicating entity is an AN as far as it implements an ACS. The ANI is designed to support communication between different ANs, therefore between operator and user, service provider and user, different user devices, different devices within a local network, different operators, different service providers and so forth. The communication means and access technologies that are actually used for communication may be different: one main function of the ACS is to handle the underlying multiple-access infrastructure in an optimal way, allowing for improved system throughput, enhanced connectivity and user QoS experience.

In operation, according to the preceding figures and Ref.D2-2 paragraph 4.2, the MRA architecture consists of two main components: namely MRRM and GLL with functionality and mechanisms to optimise the utilization of radio resources in the connectivity layers ACY below the ARI. The design of the MRRM and GLL functionality and interfaces is a trade-off between high level management of the load and the aggregate resources and the instantaneous adaptation to specific link layer status. The MRA architecture must provide a smooth interface to IP and transport layer to better support the IP and reduce the end-to-end round trip time while minimizing the signalling overhead within the ACS of stand-alone as well as composed ANs. The basic split of functionality and mechanisms is considered in MRRM and GLL. More in particular:
- MRRM is responsible for joint management of radio resources and load distribution between the different Radio Accesses (RA). This includes the initial assignment of one or several RAs to a particular user connection, as well as further changes in this assignment. MRRM decisions may be based on load on the different RAs, QoS requirements and user preferences, characteristics of the available RAs, reception quality measurements, etc.
- GLL provides unified link layer processing, offering a unified interface towards higher layers and adaptation to the underlying RATs. The GLL is free to map data flows to the RAs selected by the MRRM, either sequentially or in parallel. GLL decisions can be based on link state information, QoS requirements and policy rules. GLL also enables efficient multi-hop forwarding of data packets across different RATS.

MRRM works through the establishment and maintenance of different sets, which are defined in the following:
- **MRRM DS** (Detected Set): The set of all RAs that have been detected by MRRM through e.g. scanning or reception of RA advertisements. The RAs of MRRM DS may be known by MRRM at different levels of detail.
- **MRRM CS** (Candidate Set): The set of RAs that are candidate to be assigned by the MRRM to a given data flow. The MRRM CS is a flow-specific subset of the MRRM DS. It is selected based e.g. on policies, link characteristics and quality.
- **MRRM AS** (Active Set): The set of RAs assigned by the MRRM to a given data flow at a given time. The MRRM AS is a subset of the MRRM CS. It is chosen based e.g. on link characteristics, quality statistics, policies and flow requirements. Moreover, multicast/broadcast communication is allowed by MRRM AS encompassing multiple receivers.
- **GLL AS** (Active Set): The set of RAs assigned to a given GLL entity by MRRM to serve a given data flow at a given time. The GLL AS is always a subset of the MRRM AS. Dynamic selection within GLL AS of the RAs used for transmission is performed autonomously by GLL.

Information included in each set may cover identity, capabilities, related measurements, access costs, etc.

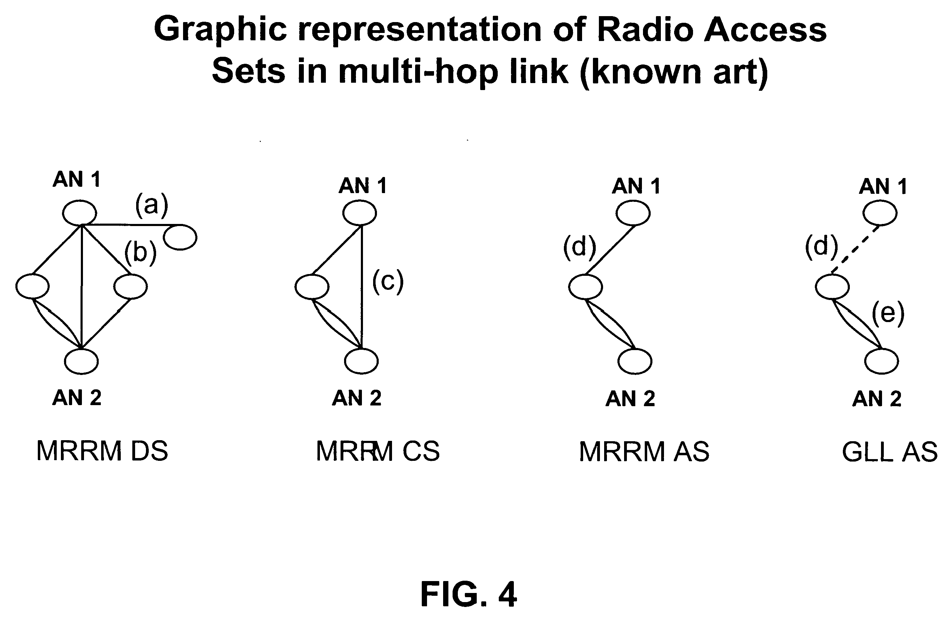

The above set definitions are immediate for the simple single-hop RA, but are also valid in multi-hop cases, combining multiple RAs sequentially (multi-hop) and/or in parallel. In such cases these sets consist of graphs as illustrated in **fig.4**. With reference to the figure, any "oval" represents an AN, while every line represents an RA. The pictures relate to a flow from AN1 to AN2 (except MRRM DS which is not flow specific). Observe that the figure exemplifies how different sets may combine RAs and ANs in a multi-hop and/or parallel fashion. Assuming a centralized MRRM in AN1 that constructs an MRRM DS, and then establishes the other MRA sets for the requirements of a specific flow:
- The MRRM DS includes all detected RAs in AN1, detected through e.g. scanning or reception of RA advertisements.
- The MRRM CS includes all the detected RAs that could be used for a given flow from AN1 to AN2. In the example, RA (a) cannot reach AN2, while RA (b) is discarded e.g. because the radio link is too weak to provide the minimum QoS level, or the required transport service cannot be provided, or some policy reasons are blocking it.
- The MRRM AS includes all RAs that are assigned to the flow. RA (c) is here not included in the MRRM AS because it is not suitable if compared to the other RAs e.g. due to the associated costs, traffic conditions and/or currently offered QoS.
- The GLL AS for a given GLL entity (pair) in this example only includes RAs (e) where multi-radio diversity can be performed, while RA (d) may be associated to a different GLL entity or may have no GLL capabilities.

Ref.D2-2 section 6.2, which states *"MRRM concepts could also be reused and extended to cover fixed accesses for mobile*/*fixed access convergence."*

A number of Basic functions for MRRM are described in Rel.D2-2: RA Advertising, RA Discovery, MRRM Negotiation and RA Selection. These functions are not detailed in Ref.D2-2 in terms of messaging, and their scope may be partly overlapping, mainly due to the early stage of MRRM concept development. However, MRRM entities need to exchange information in order for MRRM to fulfil its funcitonality. With respect to exchanged information, again in Ref.D2-2: "The exchanged *availability and*/*or status* information between MRRMs will depend on the distribution alternative:
- In case one centralised MRRM entity takes complete control of the individual RAs of another AN, it is preferable for the MRRM entity to obtain detailed information about the configuration and exact *status* of each RA in the other AN.
- Within a more distributed approach where each MRRM is responsible to manage the own RAs autonomously, it is more suitable to exchange information about the *availability* of each RA and bearer service".

The european patent application EP 1 503 606, in the name of the same Applicant, describes a method for common radio resource management (CRRM) within a mobile radio communication network employing different radio access technologies (UTRAN, GERAN), based on the exchange of traffic-related Information Elements including indications of the «availability» of bearer services in the cell in terms of maximum bitrate, either guaranteed or not guaranteed, that can currently be allowed to each bearer service. The bearer services are subdivided into: Conversational, Streaming, Interactive, and Background QoS classes and then further subdivided into radio access technology and sub-technology types. This prior art is limited to a communication between network controllers such as BSCs and RNCs. The bearer services that are described are only defined as the communication means between the RNC or BSC and the users.

### OUTLINED TECHNICAL PROBLEM

In order to implement the Ambient Networks concept of MRRM AS, and to achieve optimal resource management in Ambient Networks, it is of fundamental importance finding a suitable method how to represent resource status information within such an environment. This information can then be used in general for the purpose of service setup, mobility, session reconfiguration and resource management in beyond-3G networks characterised by convergence of various access technologies. The CRRM method disclosed in the aforementioned patent application is largely insufficient, as it suggests the exchange of "bearer service availability" IEs for one-hop unicast communications from the resource controller to the generic user, exchanging this information between resource controllers of operator's networks, and for a bearer service concept that corresponds to the Radio Bearer (RB) or the Radio Access Bearer (RAB) of 3GPP TS 23.107 V5.2.0. The major problem is that the bearer service concept of this CRRM method is not the same as the bearer service concept to be defined in the AN environment.
3GPP TR 21.905 V6.3.0: "Vocabulary for 3GPP Specifications" reports the following definitions:
**Bearer:** An information transmission path of defined capacity, delay and bit error rate, etc.
**Bearer capability:** A transmission function which the UE (User Equipment) requests to the network.
**Bearer service:** A type of telecommunication service that provides the capability of transmission of signals between access points.

As explicitly stated in paragraph 6.6.1 of TS 23.107 V5.2.0: *"The End-to-End Service on the application level uses the bearer services of the underlying network(s). As the End-to-End Service is conveyed over several networks (not only UMTS) it is not subject for further elaboration in the present document".* With that, the information transmission path associated to a bearer only runs inside a 3GPP network, but not necessarily end-to-end.

In Ambient Networks instead, end-to-end transmissions are of high importance due to the need to support e.g. PANs and multi-hop scenarios.

For the sake of the present invention therefore, it could need to define bearer services within AN as communication means at the ARI, based on the MRRM AS concepts. In other words it could need dealing with a higher level of resource management than in EP 1 503 606. Satisfactory descriptions of AN networking are currently unknown in the specifications, due to the early stage of concept development within the AN project. Note that the ARI interface, along with all interfaces in fig.1, is at the time of writing only a logical interface which could be implemented in different ways and at different levels of resource management.

### OBJECT, SUMMARY AND ADVANTAGES OF THE INVENTION

The main object of the present invention is that to overcome the limitation of the prior art dealing with bearer service in multi-access networks, particularly but not exclusively in the so-called Ambient Networks.

The invention achieves said object by providing a method for managing bearer services among different networks (e.g. user terminals, PANs, operator networks, access providers, content providers, etc.) and access technologies (e.g. UMTS, GSM, 4G, WiMAX, WLAN, Bluetooth, fixed networks, etc.) over specified access routes either single-hop, multi-hop, unicast, multicast, or broadcast, employing the transport means and access technologies supported by said networks, as disclosed in claim 1.

From the above statement, a bearer service is a transport service through different networks along an access route. The bearer concept is in such a way extended in respect of the prior art.

In order to extend the concept of MRRM to the inclusion of fixed (wireline) resources as opposed to radio resources, we will use in the following the term Resource Manager (RM) instead of MRRM. Likewise, we use the term "access" instead of "radio access".

According to the method of the invention and considering, without limitation, a distributed management approach, a controller (RM) inside each network (AN) exchanges negotiation messages with the other networks including bearer service description information elements over every specified access route. The description includes in its turn: bearer service characteristics, bearer service requirements, and bearer service availability information elements.

Given the above definition of bearer service, the method of the invention is detailed as in the following:
- The access route is specified end-to-end from one route head to one or more route ends, possibly passing through one or more networks (ANs) and different access technologies (multi-access) either in parallel or multi-hop fashion.
- A route head corresponds to a given access (source) network. A route end corresponds either to a network(s) or to specific "access methods" of a network.
- An access method may correspond to a given access technology (e.g. GSM), or to a sub-technology of a given technology (e.g. UMTS HSDPA), or to a generic method how to access a network (e.g. GLL parallel transmission between UMTS HSDPA and WLAN).
- For a given access route and access method, a bearer service is described of either standard or specified characteristics. Standard bearer services describe well known transport services, e.g.: conversational, streaming, interactive and background (as for the UMTS bearer services), but they may also encompass the "best effort" bearer service typical of fixed internet, the "immediate streaming" of multicast/broadcast bearer service on reserved resources, and more.
- Specified bearer services, i.e. bearer services of specified characteristics, may also be allowed: e.g. in certain cases an operator may desire to advertise a bearer service of specific characteristics in terms of throughput, delay, etc.
- Furthermore, a bearer service may be characterized by its cost and associate security level.

Thanks to the method of the invention, by knowing the availability of bearer service over every specified access route, the controller inside a network is put in the position to perform correct decisions regarding e.g.: service establishment, admission control, different types of handovers, traffic control, network reconfiguration, etc.

Although the method of the invention is designed to allow the end-to-end communications of Ambient Networks, it is not limited thereof because a similar method for resource management could be easily adopted within other Ambient Networks scenarios: e.g. within the network of an access provider managing its multiple accesses from its core network to the user, or between access providers for the purpose of resource sharing in order to improve performances for roaming users. Moreover it should be noted that although the Ambient Networks project has focused so far on radio access networks, the method of the invention describes an Access Route that may include terrestrial links the bearer service shall be specified thereon. In general, the method of the invention is designed for beyond-3G access architectures of communication networks.

### BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **fig.1,** already described, shows an Ambient Control Space and Connectivity diagram of the so-called Ambient Networks;
- **fig.2,** already described, shows an exemplary Ambient Network scenario;
- **fig.3,** already described, highlights interfacing undergoing the Ambient Network scenario of fig.2;
- **fig.4**, already described, shows a graphic representation of various types of Radio Access Sets in multi-hop link between two Ambient Networks of fig.3;
- **fig.5** shows a message sequence chart indicative of the bearer service resource management method of the present invention.

### DETAILED DESCRIPTION OF AN EMBODIMENT OF THE INVENTION

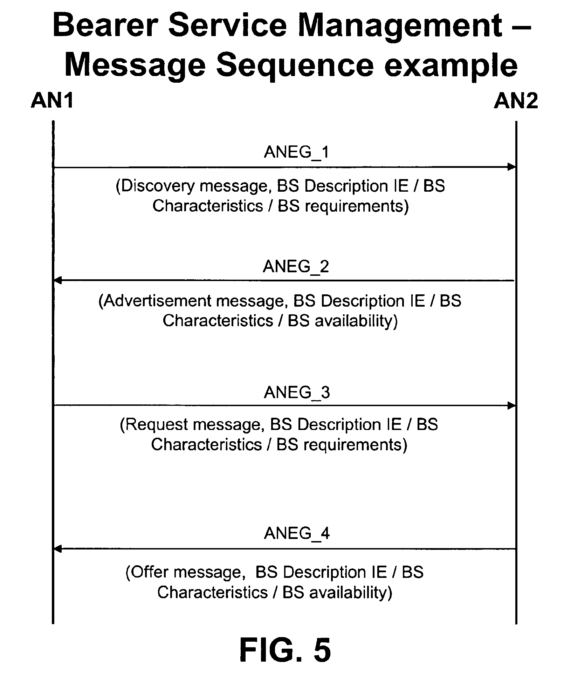

A bearer service management method suitable to be implemented in the Ambient Network communications is represented by the message sequence chart of **fig.5**, limitedly, for the sake of simplicity, to only two networks AN1 and AN2. Without limitations, a distributed approach in terms of resource management is considered where each AN includes its own RM entity (controller). These RM entities exchange information for the same purpose of the MRRM entities of Ref.D2-2: for implementing the generic functions of negotiation, information exchange, advertising and discovery.

With reference to **fig.5,** the RM entities inside AN1 and AN2 continuously calculate bearer *service availability IEs* for specific access technologies and links on the basis of specific information such as capacity/load parameters, availability indicators derived from access route tests or other bearer service availability-related information. Besides the RM entities continuously calculate *required bearer service IEs* based on service and application needs, or system (network) needs like congestion control, system reconfiguration, etc. With the result of said calculations the RM entities exchange negotiation messages ANEG_1 to ANEG_4, which contain *Bearer Service Description IEs* for the purpose of describing required bearer services, and/or the bearer services that can be offered over specified access routes. In the message exchange the Bearer Service Description IE is used in *discovery messages, advertisement messages, request messages* and *offer messages.* All these messages are negotiation messages where the object under negotiation - i.e. the bearer service - is more and more detailed message after message, aiming to identify the object at the required level of detail by the end of the negotiation. Inclusion of BS characteristics, BS requirements and BS availability is not mandatory in every message, but it is subject to specific policies and roles within each AN. With reference to **fig.1**, the interface over which these messages are exchanged corresponds either to the ANI and/or the ARI for RM entities placed in different ANs, or to other AN internal interfaces between RM entities.
The messaging described between AN1 and AN2 does not exclude existence of other ANs that do not take part in the negotiation messaging, while being subject of negotiation: e.g. the identifiers of other ANs may be included within said messaging.

Said messaging is designed to support multi-access operations, MRTD between accesses in the same or different ANs, multi-hop, unicast, multicast/broadcast (M/B), UL/DL, cost and security management even in a combined fashion. The RM entities respectively included in AN1 and AN2 may advertise, discover and select Bearer Services for different access routes, and combine them in series to realise multi-hop transmissions. In this case, RM would need to check whether the multi-hop bearer service constructed end-to-end still conserves the requirements for the given flow, e.g. by summing the delays in the different hops in order to obtain an end-to-end delay figure, or by testing the end-to-end bearer service by sending test data and retrieving the required performance measures to derive end-to-end bearer service characteristics.

For M/B transmissions routes can be specified like distribution trees with one head and multiple ends, with Bearer Services that apply to the whole distribution tree. Moreover, if the Route end is simply a cell, M/B transmissions would also be possible. Finally, broadcast links exist where for UL and DL the distribution tree is the same, or simply where UL and DL directions cannot be distinguished: in this case no distinction is made between UL and DL, or in other words they need to be described together: this is for example the case for typical Ethernet protocols over wired communication infrastructures.

In order to support the functionality of entities such as the Access Broker of Ref.D2-2, a centralised and dedicated RM entity may be able to track specific access routes and their performances, also keeping track of the reliability of the involved bearer services and ANs in order to provide secure and trusted resource management functions.

As outcome of the method of the invention, the RM entities respectively included in AN1 and AN2 knowing the *availability* of bearer service over every specified access route, are put in the position to perform correct decisions regarding e.g.: service establishment, admission control, traffic control, network and session reconfiguration, different types of handovers including handover between last-hop access points, route optimisations as handovers internal to the access route, handover between end-user devices, handover of single flows within a session, etc.

Messages exchanged in the RM method of **fig.5** avail of Information Elements detailed in the following **TABLES 1** to **7**. Without limitation, a 3GPP-like representation of information in tabular format is used, which could map to some implementations, nevertheless other ways to represent the information could be used, e.g. XML.

The following **TABLE 1** describes the *Bearer Service Description IE.*

| **IE/Group Name** | **Presence** | **Range** | **IE type and reference** | **Semantics description** |
|---|---|---|---|---|
| **Route heads** | M | 1..m | | |
| > Route head | M | | AN ID | Specifies a unicast or M/B access route characterised by a single "Route head" indicating the Ambient Network Identifier (AN ID) from which the BS would be provided. |
| **> Route ends** | M | 1..n | | |
| >> Route end | M | | List of AN IDs or cell IDs, or ANY. | Specifies a sub-part of the access route characterised by a single "Route head" and a "Route end" indicating the Ambient Network Identifiers, or group of cells for which the Access Routes are described. If ANY, the bearer service would provide access to/from the AN in "Route head" without the need to specify any "Route end". |
| **>> Access Routes** | M | 1..o | | |
| >>> Access Route number | M | | INTEGER, or ANY. | A route number distinguishing between different routes with the same "Route head" and "Route end" fields. It can be specific to this negotiation, "Route head" and "Route end" fields. ANY can also be used in request messages if no route number can be specified |
| **>>> Access Method** | M | 1..p | | |
| >>>> Access method | M | | One or more access technologies and/or the policies how to use them, or ANY. | Including: FDD, FDD-HSDPA, FDD-HSUPA, TDD-LCR, TDD-HCR, GSM, GSM CS, GSM HSCSD, GSM ECSD, GSM EGPRS, IEEE 802.11, 4G, IEEE 802.16, Bluetooth, IrDA, 4G, USB, LAN, ADSL, "GLL parallel MRTD@MAC [FDD/GSM/IEEE802.11]", "GLL@MAC [FDD/GSM]" or ANY. If "ANY", the Access Method is not relevant. |
| >>>> Bearer Services | M | | Bearer Services IE | Specifies the BSs for the indicated route and Access method. |

With reference to **TABLE 1**, bearer services are provided over given Access Routes, therefore the *Bearer Service Description IE* specifies one or more Access Routes by indicating:
- one "Route head", describing the point where the bearer service originates in the DL direction;
- one or more "Route end", describing for said Route head the points where the bearer services are directed in the DL direction; and
- one "Route number", differentiating between possibly different Access Routes for the same route head and ends.

Note that Cell IDs could be used to describe the "Route end": the Cell IDs defined by 3GPP may be used for the sake of migration, however future Cell IDs may be identified by a suffix of an AN ID.

For each Access Route, one or more "Access Method" is specified indicating how the "Route end" can be accessed. The Access *method IE* indicates for the last hop in the DL direction (which corresponds to the first hop in the UL direction) the access technology/ies and the policies how they can be accessed. It may be specified with different granularity, i.e. the information could be less specific in the initial phase of a negotiation, and more specific in a second phase. The Access *method IE* may be used to advertise a number of possible access methods for the same access route, or to require Bearer Service information for a specific Access Method. If "ANY" is specified, this means that the access route is not relevant since e.g. we only need to know that a bearer service from AN1 to AN2 is available, regardless of the final access method. Note that "GLL parallel MRTD" is described as a policy how a set of specified access technologies can be used. As in the example the Access *method IE* may indicate a specific L2 solution (GLL), the Access *method IE* may also indicate other restrictions that apply to the access route: e.g. the need to use IPv4 or IPv6, or the need to use specific protocols such as SIP or MIP. It could also be possible that a number of standardized access methods exist, and that GLL modes would be part of them. Moreover, Multi-Access Transmission Diversity should also be considered as an extension to MRTD that allows combining transmission over multiple fixed and/or radio access technologies.
Finally, for each Access Route and Access Method, *Bearer Services IE* describes the applicable Bearer Services.

The following **TABLE 2** describes the *Bearer Services IE.*

| **IE/Group Name** | **Presence** | **Range** | **IE type and reference** | **Semantics description** |
|---|---|---|---|---|
| **Bearer Services** | | 1..n | | |
| > Bearer Service Number | M | | INTEGER, or ANY | It indicates the BS reference number, standard or specific to this negotiation or negotiation. ANY can be used in request messages if no BS number can be specified. |
| **> Link Reference group** | M | 1..2 | | |
| >> Link Reference | O | | INTEGER (1,2,3) | The specified BS refers to: 1: UL 2: DL 3: UL and DL |
| >> Bearer Service Characteristics | O | | Bearer Service Characteristics IE | Describes the characteristics of the BS. |
| >>Bearer Service Requirements | O | | Bearer Service Request IE | It indicates requested parameters for the BS. |
| >> Bearer Service Availability | O | | Bearer Service Availability IE | It indicates the estimated availability of the specified BS. |

With reference to **TABLE 2,** the *Bearer Services IE* describes both standard and non-standard bearer services in terms of a *Bearer Service Number IE,* their characteristics, requirements and/or availability. *Bearer Services IE* can include separate or joint descriptions for UL and DL. To be noted that a *Bearer Service Number IE* could be used within a negotiation to indicate both a requested bearer service and/or an offered one. Values of the *Bearer Service Number IE* are defined for a number of *standard Bearer Services* of specified characteristics as follows:
1. *M*/*B Class 1:* Propagation delay is < 250 ms. The bearer service runs on reserved resources, therefore the resource can be made available immediately or in a rather short time. Residual BER < 10⁻³. Unacknowledged transmissions take place.
2. *LAN-like delay:* Propagation delay is < 5 ms. Residual BER < 10⁻⁵. Unack.
3. *Very low delay.* Propagation delay is < 20 ms. Residual BER < 10⁻⁵. Unack.
4. *Conversational:* Propagation delay is < 80 ms. Residual BER < 10⁻³. Unack.
5. *Streaming:* Propagation delay is < 250 ms. Residual BER < 10⁻³. Unack.
6. *Interactive:* Propagation delay is < 3 s. Residual BER < 10⁻⁵. Ack.
*7. Background:* Propagation delay is < 1 min. Residual BER < 10⁻⁵. Ack.
*8. Best Effort:* Propagation delay can be any. Residual BER < 10⁻⁵. Unack.
   Higher values of the *Bearer Service Number IE* are free to use by any RM entity within the scope of a negotiation, and their characteristics need to be specified within the *Bearer Service Characteristics IE.*

The following **TABLE 3** describes the *Bearer Service Characteristics IE.*

| **IE/Group Name** | **Presence** | **Range** | **IE type and reference** | **Semantics description** |
|---|---|---|---|---|
| Allowable Bitrates | O | 1..m | X * 10^{Y} bit/s; X and Y are INTEGERS. | Used to describe bitrates or bitrate intervals applicable to the BS. 0 is used to describe intervals, e.g. 1,0,2 = interval 1-2 |
| Acknowledged Transmission | O | | Boolean | Specifies whether the BS transmits ack/unack data. If not included, both modes are applicable. |
| Error Rate | O | | INTEGER | Used for non-standard BSs to describe the max residual BER on route. |
| M/B Support | O | | Boolean | Used to indicate an M/B capable BS. |
| Security Type | O | 1..n | INTEGER | It indicates the type of applicable security mechanisms by means of a standardised identifying integer. |
| Propagation Delay | O | | Propagation Delay IE | Used in case of non-standard BSs to describe the Propagation delay from the Route head to the Route end. |
| Cost | O | | Bearer Service Cost IE | Specifies cost information related to this BS. |

With reference to **TABLE 3**, the *Bearer Service Characteristics IE* describes the main features of a provided bearer service.
Propagation Delay is used that allows abstracting from possible packetisation of data during transmission within the bearer service that may still occur. For the same reason, no mention is done to SDUs / PDUs.
Both *Acknowledged Transmission IE* and *Error* Rate *IE* may be included to indicate the quality of transmission over the bearer service.

The following **TABLE 4** describes the *Propagation Delay IE.*

| **IE/Group Name** | **Presence** | **Range** | **IE type and reference** | **Semantics description** |
|---|---|---|---|---|
| **Propagation Delay** | | 1 | | |
| > Min | O | | INTEGER | Minimum propagation delay in ms. |
| > Max | O | | INTEGER | Maximum propagation delay in ms. |
| > Average | O | | INTEGER | Average propagation delay in ms. |
| > Variance | O | | INTEGER | Variance of the propagation delay in ms. |

With reference to **TABLE 4,** the *Propagation Delay IE* specifies delay characteristics of the given Bearer Service. To be noted that "propagation delay" is not a measure of physical delay, but a measure of higher layer delay. Reported to the abstractions of fig.1, the propagation delay is the time that data requires to be transmitted from one ARI instance in the route head, to the ARI instances in the route ends.

The following **TABLE 5** describes the *Bearer Service Cost IE.*

| **IE/Group Name** | **Presence** | **Range** | **IE type and reference** | **Semantics description** |
|---|---|---|---|---|
| Tariff scheme | O | | INTEGER (1..100) | Identifier of Tariff scheme for the BS |
| Cost parameters | O | | To be standardis ed | Cost per minute, per second, per kbyte, per kbit/s ...as required by the tariff scheme. |

With reference to **TABLE 5**, the *Bearer Service Cost IE* describes cost related parameters that are essential for enabling cost management between Bearer Services of different cost. A number of standardized tariff schemes and cost parameters are envisaged, while others may be specified by individual RM entities. Note that incompatible tariff schemes may simply require the intervention of the user, and may be due to competing providers.

The following **TABLE 6** describes the *Bearer Service Availability IE.*

| **IE/Group Name** | **Presen -ce** | **Range** | **IE type and reference** | **Semantics description** |
|---|---|---|---|---|
| Reason | O | | INTEGER (1,2) | 1: any (default), including cell change due to load/traffic reasons, Directed Retry or establishment of new services. 2: restricted: i.e. soft handover, necessary handovers and emergency services. |
| Available Bitrate | O | | X * 10^{Y} bit/s; X and Y are INTEGERS. | It indicates approximately the available bitrate that can be provided on the specified bearer service to a single user/request for the specified Reason. |
| **Quantity** | O | 1 | | |
| > Rough Indication | O | | INTEGER (1..2) | It gives indication of the number of such available BS: 1: a few 2: many |
| > Detailed Indication | O | | INTEGER (1..1000) | When applicable, it provides explicit indication of the number of such available BS. |
| > Confidence | O | | INTEGER | The indicated number, divided by 10, indicates the mean squared error that applies to the detailed indication of quantity. |
| **Time** | O | 1..m | | |
| > From Time | O | | Date/time | Date and time from which the BS is available as indicated. If omitted, the BS is already available. |
| > Timeperiod | O | | Minutes/second s | Time period during which the BS is available as indicated, starting from the From Time. |
| > Confidency | O | | INTEGER (1..100) | Likeliness that the BS will be available in the indicated timeperiod |
| > Waiting time | O | | seconds | Used to indicate the expected waiting time from the time indicated in "From time" to transmit data over the BS. It may account for queueing processes. |

With reference to **TABLE 6**, the *Bearer Service Availability IE* specifies the availability of the bearer service in terms of reason, available bitrate, quantity and time.
Note that *Available Bitrate IE* does not necessarily indicate the specific bitrate of a bearer service, while lower bitrates on that bearer service are also possible as according to *Bearer Service Characteristics IE.* In other words, *Available Bitrate IE* already carries information about the available quantity, which should be evaluated in connection to the *Quantity IE.*

Note that *Quantity IE* may be provided in one or the other manner (rough / detailed indication) depending on the technology, therefore they may not be necessarily well comparable between technologies.

The following **TABLE 7** describes the *Bearer Service Requirements IE.*

| **IE/Group Name** | **Presence** | **Range** | **IE type and reference** | **Semantics description** |
|---|---|---|---|---|
| Reason | O | | INTEGER (1,2) | 1: any (default), including cell change due to load/traffic reasons, Directed Retry or establishment of new services. 2: restricted: i.e. soft handover, necessary handovers and emergency services. |
| Required Bitrate | O | | X * 10^{Y} bit/s; X and Y are INTEGERS. | It indicates approximately the required bitrate on the specified BS for the specified Reason. |
| **Time** | O | 1..m | | |
| > From Time | O | | Date/time | Date and time from which the Bearer Service is required. If omitted, the BS is required as soon as possible. |
| > Timeperiod | O | | Minutes/second s | Time period during which the Bearer Service is required, starting from the From Time. |

With reference to **TABLE 7**, the *Bearer Service Requirements IE* describes what is required regarding the specified bearer service.

On the basis of the above description some changes may be introduced in the exemplary embodiment by the skilled in the art without departing from the scope of the invention. For example, starting from the representation of **fig.5** the practitioner is put in the position of extending the scenario to involve more than two Ambient Networks interconnected by different access technologies, in such a way that the roles of such ANs in controlling such access technologies may differ. Centralised RM entities may exist along or even outside the access route, for the purpose of resource management regarding said route.

In another example, cost may not only be included individually for a bearer service, but it could be specified also for a number of bearer services, or for one or more routes and access methods, in order to include charging methods spanning from different kinds of flat rates to pay-per-provided-BS.

### USED ACRONYMS

- 3GPP: 3^{rd} Generation Partnership Program
- ACS: Ambient Control Space
- ACY: Ambient ConnectivitY
- ADSL: Asymmetric Digital Subscriber Line
- AN: Ambient Network
- ANI: Ambient Networks Interface
- ARI: Ambient Resource Interface
- AS: Active Set
- ASI: Ambient Service Interface
- BAN: Body Area Network
- BER: Bit Error Rate
- BS: Bearer Service
- BSC: Base Station Controller
- CDMA: Code Division Multiple Access
- CRRM: Common Radio Resource Management
- CSD: Circuit Switched Data
- DL: Downlink
- ECSD: Enhanced CSD
- EDGE: Enhanced Data rates for GSM Evolution
- EGPRS: Enhanced GPRS
- FDD: Frequency Division Duplexing
- GERAN: GSM EDGE Radio Access Network
- GLL: Generic Link Layer
- GPRS: General Packet Radio Service
- GSM: Global System for Mobile communications
- HCR: High Chip Rate
- HSCSD: High Speed Circuit Switched Data
- HSDPA: High Speed Downlink Packet Access
- HSUPA: High Speed Uplink Packet Access
- HTTP: Hyper Text Transfer Protocol
- IE: Information Element
- IEEE: Institute of Electrical and Electronics Engineers
- IP: Internet Protocol
- IrDA: Infrared Data Association
- IST: Information Society Technologies
- LAN: Local Area Network
- LCR: Low Chip Rate
- MAC: Medium Access Control
- M/B: Multicast/Broadcast
- MIP: Mobile IP
- MRA: Multi-Radio Access
- MRRM: Multi-Radio Resource Management
- MRRM AS: MRRM Active Set
- MRRM CS: MRRM Candidate Set
- MRRM DS: MRRM Detected Set
- MRTD: Multi Radio Transmission Diversity
- PAN: Personal Area Network
- PDU: Protocol Data Unit
- QoS: Quality of Service
- RA: Radio Access
- RAB: Radio Access Bearer
- RAT: Radio Access Technology
- RM: Resource Manager
- RNC: Radio Network Controller
- RRM: Radio Resource Management
- SDU: Service Data Unit
- SIP: Session Initiation Protocol
- TDD: Time Division Duplexing
- UMTS: Universal Mobile Telecommunication System
- USB: Universal Serial Bus
- UE: User Equipment
- UL: Uplink
- UT: User Terminal
- UTRAN: Universal Terrestrial Radio Access Network
- WCDMA: Wideband CDMA
- WiMAX: Worldwide Interoperability for Microwave Access
- WINNER: Wireless World Initiative New Radio
- WLAN: Wireless Local Area Network
- XML: extensible Markup Language

## Claims

1. Method for managing bearer services among communication networks (AN1,....,AN6) with different access technologies, where each network includes controlling means executing the steps of:
- continuously calculating Bearer Service Availability Information Elements for specific access technologies on the basis of specific availability-related acquired information;
- continuously evaluating bearer service requests based on type of services, application and network needs;
- exchanging negotiation messages (ANEG_1,...,ANEG_4) containing Bearer Service Description Information Elements for requesting and/or offering bearer services;
**characterized in that**: said Bearer Service Description Information Elements are associated to respective access routes each specified from one route head to at least one route end passing through different access technologies.

2. The method of claim 1, **characterized in that** said networks include ambient networks with multi-radio access technology.

3. The method of claim 1 or 2, **characterized in that** said specified access routes give support to multicast transmissions.

4. The method of claim 1 or 2, **characterized in that** said specified access routes give support to broadcast transmissions.

5. The method of claim 1 or 2, **characterized in that** said specified access routes give support to multi-hop transmissions.

6. The method of any preceding claim, **characterized in that** said route head corresponds to a given access network.

7. The method of claim 6, **characterized in that** said route end corresponds either to a network or to specific access methods of a network.

8. The method of any preceding claim, **characterized in that** said Bearer Service Description Information Elements include delays.

9. The method of any preceding claim, **characterized in that** said Bearer Service Description Information Elements include allowable bitrates.

10. The method of any preceding claim, **characterized in that** said Bearer Service Description Information Elements include the economical costs.

11. The method of any preceding claim, **characterized in that** said Bearer Service Description Information Elements include a security method.

12. The method of any preceding claim, **characterized in that** said Bearer Service Description Information Elements include the indication of a time period for which it is required or available.

13. The method of any preceding claim from 1 to 7, **characterized in that** said Bearer Service Description Information Elements include said Bearer Service Availability Information Elements.

14. The method of claim 13, **characterized in that** said Bearer Service Availability Information Elements include indication of the available bitrate.

15. The method of claim 13, **characterized in that** said Bearer Service Availability Information Elements include indication of reason.

16. The method of claim 13, **characterized in that** said Bearer Service Availability Information Elements include indication of quantity.

17. The method of claim 13, **characterized in that** said Bearer Service Availability Information Elements include indication of the availability time period.
